# EUROPÄISCHE PATENTSCHRIFT

(11) **EP 3 888 893 B1**
(45) Veröffentlichungstag und Bekanntmachung des Hinweises auf die Patenterteilung: **19.02.2025**
(21) Anmeldenummer: 21166016.2
(22) Anmeldetag: 30.03.2021
(51) Int. Cl.: B29C 65/08, B29C 65/78, B31B 70/26, B31B 70/64, B31B 70/81, B29C 65/82, B31B 155/00

(54) **VERFAHREN UND VORRICHTUNG ZUM HERSTELLEN VON BEUTELN**
DEVICE AND METHOD FOR MANUFACTURING BAGS
PROCÉDÉ ET DISPOSITIF DE FABRICATION DE SACS

(30) Priorität: 03.04.2020 DE 102020002137
(43) Veröffentlichungstag der Anmeldung: 06.10.2021
(73) Patentinhaber: Focke & Co. (GmbH & Co. KG), 27283 Verden (DE)
(72) Erfinder: DICK, Andreas, 27386 Westerwalsede (DE); BETTIN, Michael, 27308 Kirchlinteln (DE); RIEGLER, Stefan, 21073 Hamburg (DE)
(74) Vertreter: Aulich, Martin

(56) Entgegenhaltungen:
- EP-A1- 2 441 685
- EP-A2- 1 681 155
- JP-A- 2007 283 637
- JP-A- 2016 198 919
- JP-A- H0 939 121

## Beschreibung

Die vorliegende Erfindung betrifft ein Verfahren und eine Vorrichtung zum Herstellen von Beuteln aus Folie, vorzugsweise Tabakbeuteln, bei dem eine Folienbahn an einer Schweißstation mit mindestens einem von zwei lösbar miteinander verbindbaren Profilstreifen eines mehrfach wirkenden Druckverschlusses, etwa eines sogenannten Zip-Locks^{®}, verschweißt wird, insbesondere mittels Ultraschall.

Nach dem Verschweißen derartiger Profilstreifen mit der Folienbahn im Rahmen der Beutelherstellung kommt es häufig im Nachgang zu einer Faltenbildung der Folienbahn im verschweißten Bereich. Dies liegt insbesondere daran, dass die Folienbahn und der Druckstreifen in der Regel mittels Zugkräften entlang der Schweißstation gefördert werden, sich dabei materialbedingt unterschiedlich dehnen, und sich dann später, also wenn die Zugkräfte wegfallen, wieder unterschiedlich zusammenziehen. Dabei zieht sich in der Regel der Profilstreifen stärker zusammen als die Folie, sodass es zu der beschriebenen Faltenbildung der Folie kommt. Dieser Effekt wird dadurch verstärkt oder ergänzt, dass der Druckstreifen und die Folienbahn beim Verschweißen auch durch die damit einhergehende Erwärmung zunächst gedehnt werden und sich dann beim Erkalten ebenfalls - materialbedingt unterschiedlich - wieder zusammenziehen.

Aus der JP H09 39121 A ist bekannt, einen Profilstreifen und eine Folie entlang der Umfangsfläche einer Drehtrommel mithilfe eines entsprechend gekrümmten Siegelelements miteinander zu verschweißen. Der Profilstreifen wird dabei in einer in die Umfangsfläche der Drehtrommel eingelassenen Nut geführt.

In der JP 2016 198919 A ist ebenfalls vorgesehen, dass Profilstreifen und Folie an der Umfangsfläche einer Drehtrommel straffgezogen und miteinander verbunden werden.

Die JP 2007 283637 A beschreibt eine Vorrichtung, bei der ein Profilstreifen und eine Folie zunächst an Heizblöcken entlanggeführt und dabei aufgeheizt werden. Im Anschluss werden sie durch zwei Druckrollen miteinander verbunden.

Aus der EP 1 681 155 A2 geht ein Herstellungsverfahren für einen Klettverschluss hervor, bei dem ein Klettverschlussstreifen parallel zu einer Folie gefördert wird und durch einen Siegelschuh, der Druck und Wärme senkrecht auf den Klettverschlussstreifen ausübt, mit der Folie verbunden wird.

Die EP 2 441 685 A1 beschreibt ein Verfahren und eine Vorrichtung, bei der zwei Profilstreifen eines Druckverschlusses durch Rollen mit einer Nut an der Umfangsfläche, die den jeweiligen Profilstreifen aufnimmt, an den Rändern einer Folie positioniert und dann mit der Folie verbunden werden.

Ausgehend hiervon ist es Aufgabe der vorliegenden Erfindung, das eingangs genannte Verfahren und die eingangs genannte Vorrichtung weiterzuentwickeln, insbesondere, um der vorgenannten Faltenbildung entgegenzuwirken.

Diese Aufgabe wird gelöst durch ein Verfahren mit den Merkmalen des Anspruchs 1 und eine Vorrichtung mit den Merkmalen des Anspruchs 10.

Danach ist erfindungsgemäß ein Verfahren der eingangs genannten Art zum Herstellen von Beuteln aus Folie dadurch gekennzeichnet, dass der Profilstreifen während des Verschweißens mit in Längsrichtung wirkenden, einer Faltenbildung der Folienbahn entgegenwirkenden Druckkräften beaufschlagt wird.

Es hat sich überraschend gezeigt, dass mit einem solchen Beaufschlagen des Profilstreifens im besten Fall erreicht werden kann, dass die Faltenbildung vollständig vermieden werden kann. Mindestens kann sie aber reduziert werden. Dazu trägt nach derzeitigem Kenntnisstand bei, dass der Profilstreifen durch das Beaufschlagen mit Druckkräften vor dem Verschweißen gestaucht wird bzw. in diesem eine Druckspannung erzeugt wird, was dazu führt, dass der Profilstreifen beim Erkalten nach dem Verschweißen relaxiert und im Ergebnis weniger stark zusammenzieht als dies ohne das Beaufschlagen mit den Druckkräften der Fall wäre. Die Unterschiede in dem Dehnungsverhalten von Profilstreifen einerseits und Folie andererseits können so kompensiert werden. Gleiches gilt für das unterschiedliche Dehnungsverhalten, sollten der Profilstreifen und die Folie durch Beaufschlagen mit Zugkräften gedehnt werden.

Es versteht sich, dass in der Regel beide Profilstreifen des Druckverschlusses mit der Folienbahn verbunden werden und entsprechend auch der andere Profilstreifen in der erfindungsgemäßen Weise mit Druckkräften beaufschlagt werden kann oder sollte, um auch im Zusammenhang mit dem Verschweißen dieses anderen Profilstreifens eine Faltenbildung der Folie zu vermeiden bzw. einer solchen entgegenzuwirken. Insofern können sämtliche Merkmale bzw. Maßnahmen, die in dieser Anmeldung exemplarisch für den einen Profilstreifen beschrieben werden auch für den anderen Profilstreifen vorgesehen werden.

Erfindungsgemäß werden die Druckkräfte mittels einem, insbesondere einer Seite des Profilstreifens zugewandten, an dem Profilstreifen angreifenden Kraftübertragungsorgan, insbesondere einer Kraftübertragungsrolle, auf den Profilstreifen aufgebracht werden. Insbesondere einem Kraftübertragungsorgan, das ein oder mehrere, bevorzugt zackenförmige Kraftübertragungselemente aufweist, die an dem Profilstreifen, insbesondere an einer Seite des Profilstreifens, zur Übertragung der Druckkräfte angreifen. Alternativ zu der vorgenannten Kraftübertragungsrolle könnten auch andere Kraftübertragungsorgane verwendet werden. Beispielsweise ein sich linear parallel zur Förderrichtung taktweise hin- und her bewegendes Organ, das Zacken aufweist (Zackenkamm), und das jeweils in einer Vorschubbewegung an dem Profilstreifen angreift, in einer Rückbewegung dagegen nicht. Es könnten dabei auch zwei solcher Organe vorgesehen sein, die abwechselnd an dem Profilstreifen angreifen, sodass insgesamt trotz der taktweisen und nur während der jeweiligen Vorschubbewegung Druckkräfte auf den Profilstreifen übertragenden Bewegung dennoch im Ergebnis kontinuierlich Druckkräfte auf den Profilstreifen übertragen werden können.

Insofern im Rahmen dieser Anmeldung von den "Seiten" des Profilstreifens oder der Folienbahn gesprochen wird, sind hiermit naturgemäß deren beiden großflächigen Seiten gemeint und nicht deren schmalen Längskanten, an denen diese großflächigen Seiten aneinander angrenzen bzw. die diese verbinden.

Bevorzugt können die Folienbahn und der Profilstreifen, während sie miteinander verschweißt werden, kontinuierlich entlang der Schweißstation gefördert werden. Es liegt aber auch im Rahmen der Erfindung, die Folienbahn und den Profilstreifen taktweise zu fördern.

Bevorzugt können die Folienbahn und der Profilstreifen mit insbesondere durch vorzugsweise motorisch (ggf. einen Servomotor) angetriebene Förderorgane, vorzugsweise Zugrollen, erzeugten Zugkräften beaufschlagt werden, um die Folienbahn und den Profilstreifen in einer Förderrichtung entlang der Schweißstation zu fördern. Dabei können die Druckkräfte zusätzlich zu den Zugkräften aufgebracht werden, vorzugsweise in Förderrichtung des Profilstreifens. Insbesondere Druckkräfte, die größer sind als die Zugkräfte.

Der Profilstreifen wird erfindungsgemäß im Bereich der Schweißstation durch ein insbesondere gleitend an dem Profilstreifen und/der der Folienbahn anliegendes Führungsmittel seitlich geführt werden, um ein seitliches, von den Druckkräften verursachtes Ausknicken des Profilstreifens zu verhindern. Dies insbesondere durch ein Führungsmittel, das einer Seite des Profilstreifens zugewandt ist.

Das Führungsmittel kann insbesondere eine auf der Folienbahn und/oder dem Profilstreifen abrollende Führungsrolle oder eine insbesondere gleitend an dem Profilstreifen und/der der Folienbahn anliegende Führungsschiene sein.

Ein solches Führungsmittel kann auf einer oder beiden Seiten des Profilstreifens oder der Folienbahn angeordnet sein.

Das Führungsmittel ist erfindungsgemäß bezogen auf die Längsrichtung oder Förderrichtung des Profilstreifens zwischen dem Kraftübertragungsorgan und dem Anlagemittel angeordnet. Vorzugsweise derart, dass es derselben Seite des Profilstreifens zugewandt ist wie das Kraftübertragungsorgan und das Anlagemittel.

Erfindungsgemäß wird die Folienbahn unter Mitnahme des Profilstreifens von einem stromab des Kraftübertragungsorgans angeordneten Schweißorgan im Rahmen des Schweißvorgangs gegen ein dem Schweißorgan gegenüberliegendes Anlagemittel gedrückt, das derselben Seite des Profilstreifens zugewandt ist wie das Kraftübertragungsorgan.

Bevorzugt kann der Profilstreifen durch ein weiteres Führungsmittel seitlich geführt werden, wobei das eine Führungsmittel der einen Seite des Profilstreifens zugewandt ist und das andere Führungsmittel der anderen Seite des Profilstreifens.

Was die Geschwindigkeitskomponente des Kraftübertragungsorgans betrifft, die bei Übertragung der Druckkräfte auf den Profilstreifen wirksam ist, insbesondere die Umfangsgeschwindigkeit der Kraftübertragungsrolle, so kann diese um 10% bis 50%, vorzugsweise um 30% größer sein als die Geschwindigkeit, mit der die Folienbahn bewegt wird.

Das Anlagemittel kann eine insbesondere drehbar (ggf. mit einem Servomotor) angetriebene Anlagerolle sein, deren Drehgeschwindigkeit bevorzugt kleiner ist als die Drehgeschwindigkeit der Kraftübertragungsrolle.

Gemäß einer weiteren Ausbildung des erfindungsgemäßen Konzepts kann vorgesehen sein, die Geschwindigkeitskomponente des Kraftübertragungsorgans, die bei Übertragung der Druckkräfte auf den Profilstreifen wirksam ist, insbesondere die Umfangsgeschwindigkeit der Kraftübertragungsrolle, nach Maßgabe der Geschwindigkeit, Temperatur und/oder der Materialart der Folie der Folienbahn und/oder des Profilstreifens zu steuern oder zu regeln. Insbesondere derart, dass in einem Speicher zu mehreren Geschwindigkeits-, Temperatur- und/oder Materialartwerten der Folie der Folienbahn und/oder des Profilstreifens jeweils insbesondere in einer Tabelle ein zugeordneter Soll-Wert für die Geschwindigkeitskomponente hinterlegt ist, und dass dieser Soll-Wert zur Steuerung oder Regelung des Kraftübertragungsorgans nach Maßgabe des jeweiligen Ist-Werts der Geschwindigkeit, der Temperatur und/oder der Materialart der Folie der Folienbahn und/oder des Profilstreifens ausgewählt wird.

Es kann auch vorgesehen sein, die Temperatur der Folie, die Temperatur des Profilstreifens, die Temperatur des Schweißorgans und/oder die Temperatur des Anlagemittels zu messen und abhängig davon die Geschwindigkeitskomponente des Kraftübertragungsorgans zu regeln, die bei Übertragung der Druckkräfte auf den Profilstreifen wirksam ist, und/oder die Leistung des Schweißorgans.

Weiter kann vorgesehen sein, dass die Folienbahn nach dem Schweißvorgang, insbesondere stromab der Schweißstation, mit einem insbesondere elektrooptischen Prüforgan, bevorzugt einem Zeilensensor, im Hinblick auf die Bildung von Falten der Folienbahn überwacht wird, und dass die Geschwindigkeitskomponente des Kraftübertragungsorgans, die bei Übertragung der Druckkräfte auf den Profilstreifen wirksam ist, automatisch verändert wird, insbesondere geregelt wird, um einer Faltenbildung entgegenzuwirken, sollte das Prüforgan eine Faltenbildung detektieren oder eine Faltenbildung, die ein vorgegebenes Maß überschreitet, und/oder die Leistung des Schweißorgans.

Eine erfindungsgemäße Vorrichtung zum Herstellen von Beuteln aus Folie, die insbesondere zur Durchführung des oben beschriebenen Verfahrens geeignet ist, weist eine Schweißstation auf, an der eine Folienbahn mit einem Schweißorgan, insbesondere einem Ultraschall-Schweißorgan, mit dem mindestens einem von zwei Profilstreifen eines solchen mehrfach wirkenden Druckverschlusses verschweißt wird, sowie ein Kraftübertragungsorgan, insbesondere eine (ggf. mit einem Servomotor) drehend angetriebene Kraftübertragungsrolle, mit dem in den Profilstreifen während des Schweißvorgangs in Längsrichtung desselben wirkende, einer Faltenbildung der Folienbahn entgegenwirkende Druckkräfte eingebracht werden können.

Das Kraftübertragungsorgan, insbesondere die Kraftübertragungsrolle, kann dabei ein oder mehrere, bevorzugt zackenförmige Kraftübertragungselemente aufweisen, die an dem Profilstreifen zur Übertragung der Druckkräfte angreifen, insbesondere an einer Seite des Profilstreifens.

Die erfindungsgemäße Vorrichtung, insbesondere die Schweißstation derselben, weist des Weiteren ein Führungsmittel auf, das den Profilstreifen an mindestens einer Seite führt, um das oben bereits skizzierte, seitliche, von den Druckkräften verursachte Ausknicken des Profilstreifens zu verhindern. Insbesondere ein Führungsmittel, das einer Seite des Profilstreifens zugewandt ist.

Die Schweißstation weist erfindungsgemäß ein dem Schweißorgan gegenüberliegend angeordnetes Anlagemittel auf, das derselben Seite des Profilstreifens zugewandt ist wie das Kraftübertragungsorgan und stromab desselben angeordnet ist, wobei die Folienbahn und der Profilstreifen zwischen dem Schweißorgan und dem Anlagemittel geführt sind, und wobei die Folienbahn und der Profilstreifen gemeinsam im Rahmen des Schweißvorgangs von dem Schweißorgan gegen das Anlagemittel drückbar sind, insbesondere gegen eine Anlagefläche des Anlagemittels.

Das Führungsmittel, insbesondere eine Führungsrolle oder eine Führungsschiene, ist erfindungsgemäß zwischen dem Kraftübertragungsorgan und dem Anlagemittel angeordnet, vorzugsweise derart, dass es derselben Seite des Profilistreifens zugewandt ist wie das Kraftübertragungsorgan und das Anlagemittel.

Die Vorrichtung, insbesondere die Schweißstation derselben, kann ein weiteres Führungsmittel aufweisen, das den Profilstreifen seitlich bzw. an dessen Seite führt, um ein seitliches, von den Druckkräften verursachtes Ausknicken des Profilstreifens zu verhindern, wobei das eine Führungsmittel der einen Seite des Profilstreifens zugewandt ist und dieses dort führt, und wobei das andere Führungsmittel der anderen Seite des Profilstreifens zugewandt ist und dieses dort führt.

Was das Anlagemittel betrifft, so kann es eine drehbare, insbesondere motorisch (ggf. einem Servomotor) angetriebene Anlagerolle sein, insbesondere eine Anlagerolle mit einzelnen, separaten, über den Umfang verteilt angeordneten Anlageflächen.

Das Anlagemittel kann eine (Innen-)Kühlung aufweisen, insbesondere zur Kühlung der Anlagefläche(n), vorzugsweise eine elektrisch betriebene Kühlung oder eine auf Kühlflüssigkeiten basierende Kühlung.

Was das Schweißorgan betrifft, so kann es als rotatorisch oder translatorisch bewegte Ultraschallsonotrode ausgebildet sein.

Gemäß einer weiteren Ausführungsform der Erfindung kann auf der anderen Seite des Profilstreifens, insbesondere ohne Versatz in Längsrichtung des Profilstreifens dem Kraftübertragungsorgan (direkt) gegenüberliegend, ein Gegenorgan angeordnet sein. Insbesondere eine bevorzugt gummierte Rolle, die gegen den Profilstreifen drückt, sodass der Profilstreifen zur Übertragung der Druckkräfte zwischen dem Kraftübertragungsorgan und dem Gegenorgan angeordnet ist, insbesondere geklemmt ist. Das Gegenorgan kann auch motorisch angetrieben sein und dabei beispielsweise zusätzlich Druckkräfte auf den Profilstreifen übertragen und/oder den Profilstreifen und/oder die Folienbahn abbremsen.

Stromab der Schweißstation kann die Vorrichtung zudem Förderorgane aufweisen, insbesondere Zugrollen, mit denen der Profilstreifen und die Folienbahn unter Aufbringen von Zugkräften entlang der Schweißstation förderbar sind, wobei das Kraftübertragungsorgan derart ausgebildet ist, dass die Druckkräfte, die es auf den Profilstreifen überträgt, in Förderrichtung aufgebracht werden.

Weitere Merkmale der vorliegenden Erfindung ergeben sich aus den beigefügten Patentansprüchen, der nachfolgenden Beschreibung bevorzugter Ausführungsbeispiele sowie aus den beigefügten Zeichnungen. Darin zeigt:
- Fig. 1: eine Schweißstation eines nach dem erfindungsgemäßen Verfahren arbeitenden Beutelpackers in Schrägansicht, teilweise geschnitten,
- Fig. 2: die Schweißstation des erfindungsgemäßen Beutelpackers in einer Seitenansicht, teilweise geschnitten,

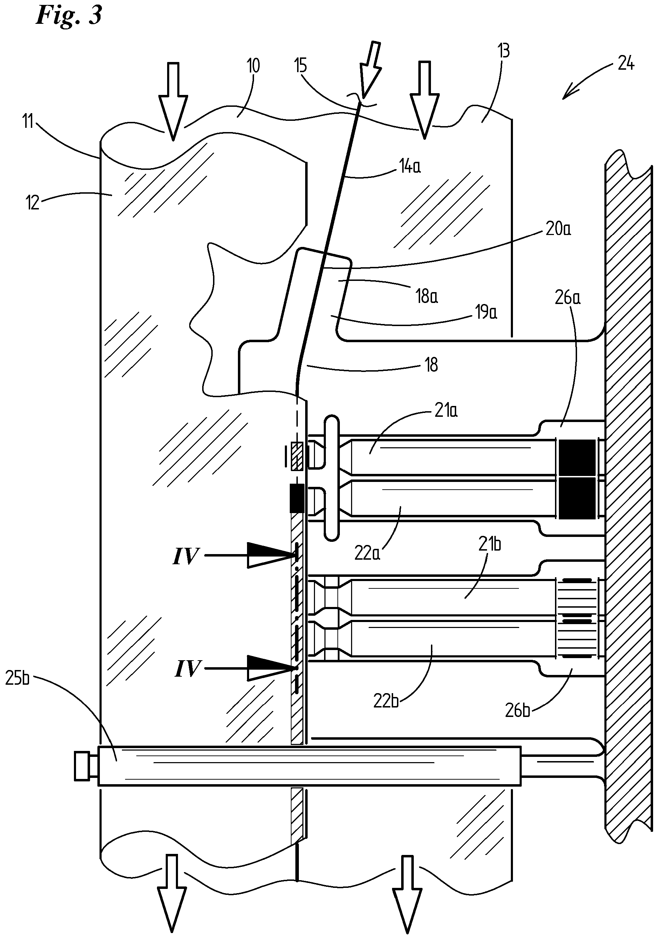

- Fig. 3: eine Schnittdarstellung der Schweißstation entlang der Schnittlinie III-III in Fig. 2,
- Fig. 4: eine Schnittdarstellung der Schweißstation entlang der Schnittlinie IV-IV in Fig. 3,

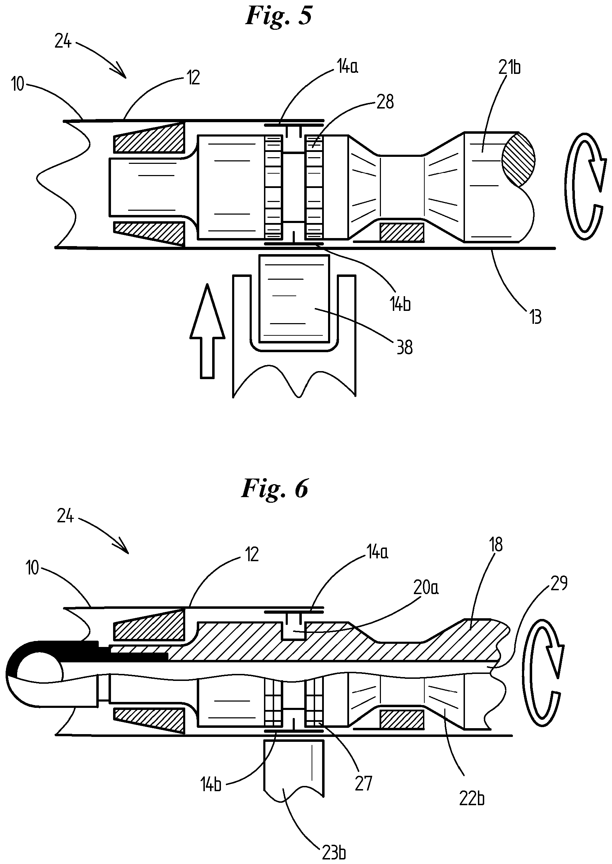

- Fig. 5: eine Schnittdarstellung der Schweißstation entlang der Schnittlinie V-V in Fig. 4,
- Fig. 6: eine Schnittdarstellung der Schweißstation entlang der Schnittlinie VI-VI in Fig. 4,

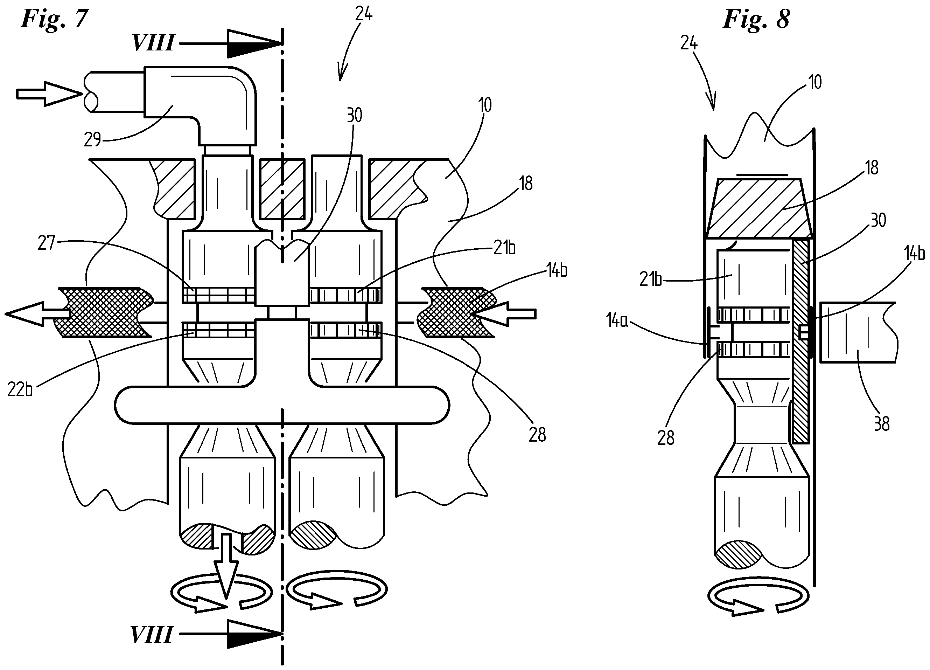

- Fig. 7: eine Schnittdarstellung der Schweißstation entlang der Schnittlinie VII-VII in Fig. 4,
- Fig. 8: eine Schnittdarstellung der Schweißstation entlang der Schnittlinie VIII-VIII in Fig. 7,
- Fig. 9: eine schematische Darstellung eines Steuerungs- bzw. Regelungskonzeptes für die Schweißstation bzw. den erfindungsgemäßen Beutelpacker.

In den Zeichnungen ist ein Teilabschnitt eines Beutelpackers zur Herstellung von Beuteln aus Folie gezeigt, vorliegend von Tabakbeuteln, nämlich vornehmlich eine Schweißstation 24 zum Verschweißen eines mehrfach wirkenden, also mehrfach öffenbaren und schließbaren Druckverschlusses 15 mit einer Folienbahn 10. Ein solcher Beutelpacker kann ansonsten aufgebaut sein wie in der deutschen Patentanmeldung DE 10 2009 008 129 A1, deren Inhalt zum Zwecke der ausreichenden Offenbarung hiermit in die vorliegende Anmeldung integriert wird.

In einen mit dem Beutelpacker hergestellten Beutel (nicht gezeigt) können ein oder mehrere Tabakportionen als Beutelinhalt eingefüllt werden. Ein solcher Beutel besteht aus dünnem Verpackungsmaterial, insbesondere mit Ultraschall und/oder Wärme siegelbarer bzw. schweißbarer (Kunststoff-)Folie.

Wie im vorliegenden Ausführungsbeispiel gezeigt, kann ein derartiger Beutel aus einer fortlaufenden Folienbahn 10 hergestellt werden. Der Ablauf ist - vereinfacht dargestellt - wie folgt:
In bereits bekannter Weise wird die zunächst ebene fortlaufende Folienbahn 10 der Schweißstation 24 mittels einer Falteinrichtung 16 unter Ausbildung einer fortlaufenden Kante 11 gefaltet und in diesem Zustand der Schweißstation 24 zugeführt. Im vorliegenden Fall umfasst die Falteinrichtung 16 ein Faltdreieck 17 sowie stromab von diesem zwei mit Abstand zueinander angeordnete Führungsrollen 25a mit parallelen, senkrecht zur Förderrichtung der Folienbahn 10 verlaufenden Drehachsen, die einen Führungsspalt einschließen. Durch diesen Führungsspalt hindurch verläuft die Folienbahn 10 in bereits umgefaltetem Zustand.

Die Kante 11 bildet bei den späteren Beuteln jeweils eine bzw. die Bodenkante, an der eine Vorderwand und eine winklig zu der Vorderwand verlaufende Rückwand des jeweiligen Beutels aneinander angrenzen.

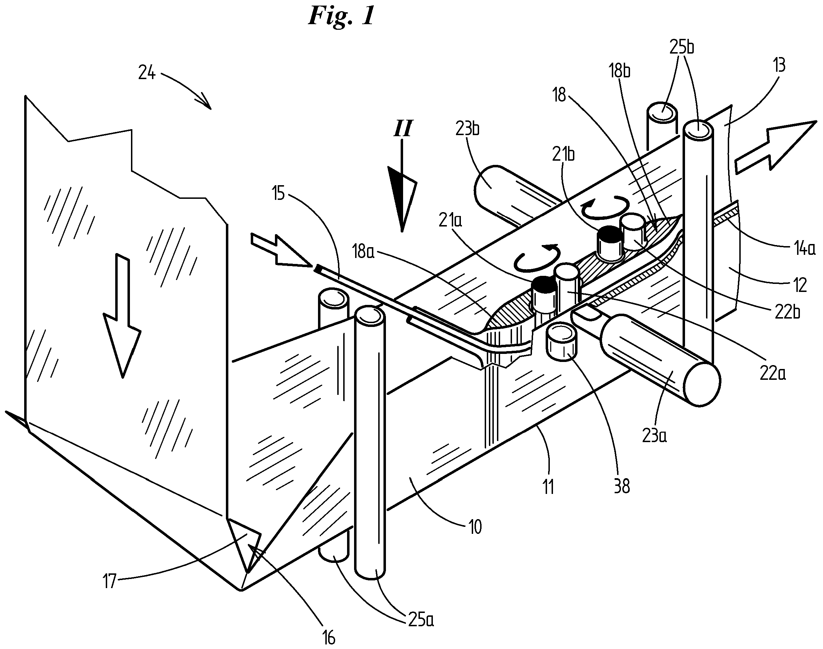

Im vorliegenden Ausführungsbeispiel wird die jeweilige Vorderwand des jeweiligen Beutels durch einen vorderen Folienbahnabschnitt 12 gebildet, die Rückwand und eine Umschlaglasche des Beutels durch einen hinteren Folienbahnabschnitt 13, vgl. Fig. 1.

Bezogen auf die Förderrichtung der Folienbahn 10 wird ein bzw. der Druckverschluss 15 (vorliegend ein Zip-Lock^{®}) stromauf der Schweißstation 24 als fortlaufende Materialbahn bzw. als fortlaufender Materialstreifen in geschlossenem Zustand in den Förderweg der Folienbahn 10 eingefördert. Der Druckverschluss 15 wird durch zwei lösbar miteinander verbindbare, fortlaufende Profilstreifen 14a und 14b gebildet und in einem geschlossenen Zustand in den Förderweg eingefördert, das heißt in einem Zustand, in dem die Profilstreifen 14a und 14b miteinander verbunden sind. An der Schweißstation 24 werden dann die Profilstreifen 14a und 14b jeweils in später noch näher beschriebener Weise mit der Folienbahn 10 verschweißt, nämlich vorliegend der Profilstreifen 14a mit dem vorderen Folienbahnabschnitt 12 und der Profilstreifen 14b mit dem hinteren Folienbahnabschnitt 13.

Stromab der Schweißstation 24 werden an einer zweiten (nicht gezeigten) Schweißstation sich gegenüberliegende Endabschnitte der Profilstreifen 14a, 14b miteinander verschmolzen ("gecrashed").

An einer dritten Siegelstation (ebenfalls nicht gezeigt) werden Quernähte hergestellt, nämlich Nähte, die senkrecht zur Bodenkante 11 verlaufen und die bei den späteren Einzelbeuteln jeweils unter Verbindung des vorderen Folienbahnabschnitts 12 und des hinteren Folienbahnabschnitts 13 die seitlichen Ränder des jeweiligen Beutels bilden.

Mittig durch diese Quernähte werden dann in einer (nicht gezeigten) Trennstation Trennschnitte eingebracht, sodass dann die verbleibenden Quernahtstreifen jeweils die die jeweilige Vorder- und Rückwand der fertiggestellten Beutel verbindenden Seitennähte bilden.

Nachfolgend werden im Detail die erfindungsgemäß besonders wichtigen Merkmale und Verfahrensschritte beschrieben, die in Zusammenhang mit dem Verschweißen des Druckverschlusses 15 mit der Folienbahn 10 an der Schweißstation 24 stehen:
Zur Vorbereitung der Schweißvorgänge an der Schweißstation 24 werden die Profilstreifen 14a, 14b zunächst voneinander getrennt bzw. der Druckverschluss 15 geöffnet. Alternativ ist aber auch denkbar, dass die Profilstreifen 14a, 14b in geschlossenem Zustand des Druckverschlusses 15 mit den Folienbahnschnitten 12 bzw. 13 verbunden werden.

Der Druckverschluss 15 wird zur Trennung bzw. Öffnung entlang einer in seinem Förderweg angeordneten Trennweiche 18 gefördert, die den geschlossenen Druckverschluss 15 in die beiden separaten Profilstreifen 14a bzw. 14b trennt bzw. die Verbindung der beiden Profilstreifen 14a und 14b löst.

Zu diesem Zweck verfügt die Trennweiche 18 über ein erstes, keilartig zulaufendes freies Ende 18a. Das freie Ende 18a greift mittig zwischen den miteinander verbundenen Profilstreifen 14a, 14b an und trennt diese in die einzelnen Profilstreifen 14a, 14b auf.

Die Trennweiche 18 weist eine insgesamt längliche Kontur auf. Stromab des freien Endes 18a verfügt die Trennweiche 18 an zwei gegenüberliegenden Längsseiten über seitliche Anlageflächen 19a, 19b. Der vordere Folienbahnabschnitt 12 wird dabei gemeinsam mit dem Profilstreifen 14a entlang der vorderen seitlichen Anlagefläche 19a gefördert, der hintere Folienbahnabschnitt 13 zusammen mit dem Profilstreifen 14b entlang der hinteren seitlichen Anlagefläche 19b.

Dabei werden die Profilstreifen 14a, 14b zumindest abschnittsweise entlang von in den seitlichen Anlageflächen 19a, 19b eingelassenen Führungsnuten 20a, 20b geführt. Diese verlaufen ausgehend von dem ersten freien Ende 18a der Trennweiche 18 entlang der seitlichen Anlageflächen 19a bzw. 19b der Trennweiche 18 bis zu einem zweiten keilartigen freien Ende 18b der Trennweiche 18.

Im Anschluss an die nachfolgend noch näher erläuterten Schweißvorgänge wird der Druckverschluss 15 (wieder) verschlossen bzw. die Profilstreifen 14a, 14b werden wieder miteinander verbunden. Zu diesem Zweck werden die Profilstreifen 14a, 14b entlang der in Förderrichtung keilförmig aufeinander zu laufenden Anlageflächen 19a bzw. 19b des zweiten keilartigen Endes 18b geführt, sodass sie aufeinander zu bewegt und schließlich durch ein Paar von sich gegenüberliegenden Führungsrollen 25b zusammengedrückt werden, zwischen denen zu diesem Zweck ein in seinen Abmessungen entsprechend angepasster Führungsspalt gebildet ist, durch den der Druckverschluss 15 bzw. die noch nicht vollständig miteinander wieder verbundenen Profilstreifen 14a und 14b geführt werden.

Die seitlichen Anlageflächen 19a bzw. 19b der Trennweiche 18 sind jeweils unterbrochen durch Aufnahmebereiche 26a bzw. 26b, in denen jeweils in Förderrichtung nacheinander ein Kraftübertragungsorgan 21a bzw. 21b und ein Anlagemittel 22a bzw. 22b (Amboss) angeordnet ist.

Das jeweilige Anlagemittel 22a bzw. 22b liegt dabei jeweils einem, auf der jeweils anderen Seite der Folienbahn 10 bzw. des jeweiligen Profilstreifens 14a bzw. 14b angeordneten Schweißorgan 23a bzw. 23b gegenüber, nämlich vorliegend jeweils einer Ultraschallsonotrode, und ist im vorliegenden Fall als insbesondere drehend (mit einem Motor) angetriebene Anlagerolle mit einzelnen, über den Umfang verteilt angeordneten Anlageflächen 27 ausgebildet.

Dabei kann vorgesehen sein, dass die Anlagemittel 22a, 22b insbesondere zur Kühlung der jeweiligen Anlagefläche(n) 19a, 19b eine insbesondere auf die Durchleitung von Kühlflüssigkeit basierende (Innen-)Kühlung aufweisen. Im einfachsten Fall kann diese beispielsweise einen im Inneren des Anlagemittels 22a, 22b verlaufenden Kühlwasserkanal 29 umfassen, durch den Kühlwasser bzw. Kühlmittel geleitet wird.

Mit dem jeweiligen Schweißorgan 23a, 23b wird der jeweilige Profilstreifen 14a bzw. 14b an den vorderen Folienbahnabschnitt 12 bzw. den hinteren Folienbahnabschnitt 13 geschweißt. Zu diesem Zweck kann das jeweilige Schweißorgan 23a bzw. 23b senkrecht zu der Förderrichtung der Folienbahn 10 bzw. des Profilsteifens 14a bzw. 14b von einer Ruheposition, in der es von der Folienbahn 10 beabstandet ist, auf die Folienbahn 10 zu in eine Schweißposition verfahren werden, in der es die Folienbahn 10 (jeweils den vorderen bzw. den hinteren Folienbahnabschnitt 12 bzw. 13) zusammen mit dem Profilstreifen 14a bzw. 14b gegen das Anlagemittel 22a bzw. 22b drückt, nämlich gegen jeweils eine Anlagefläche 27 desselben, und die Folienbahn 10 mit dem jeweiligen Profilstreifen 14a bzw. 14b verschweißt.

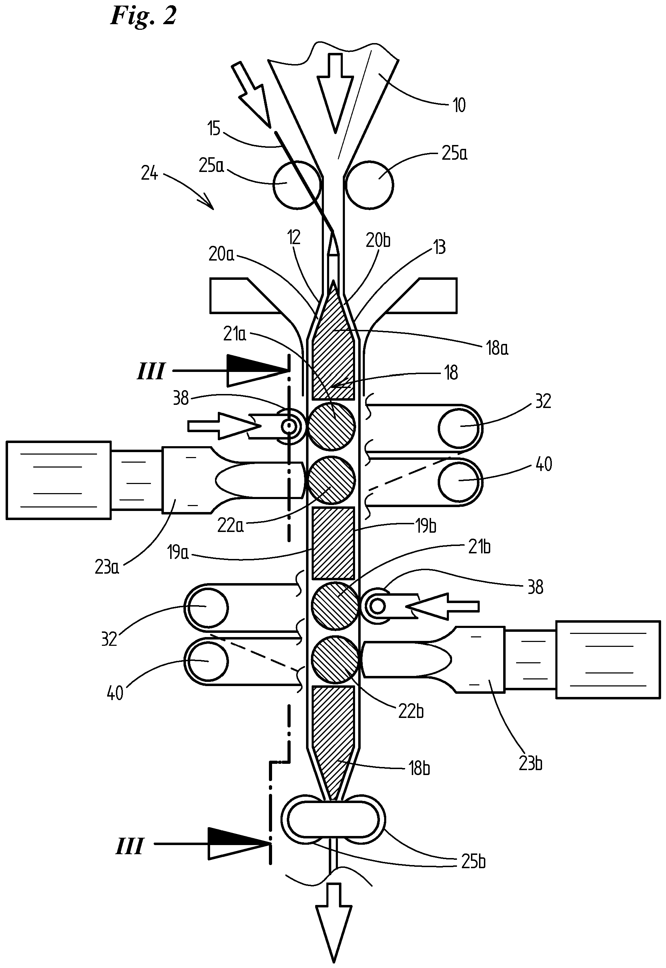

Dabei liegen der jeweilige Folienbahnabschnitt 12 bzw. 13 einerseits und der jeweilige Profilstreifenabschnitt 14a bzw. 14b jeweils aneinander an, während der jeweilige Profilstreifen 14a bzw. 14b in der jeweiligen Führungsnut 20a bzw. 20b angeordnet ist und der jeweilige Folienbahnabschnitt 12 bzw. 13 zusammen mit dem zugeordneten Profilstreifen 14a bzw. 14b zwischen dem jeweiligen Schweißorgan 23a bzw. 23b einerseits und dem Anlagemittel 22a bzw. 22b andererseits angeordnet ist, vgl. auch Fig. 2.

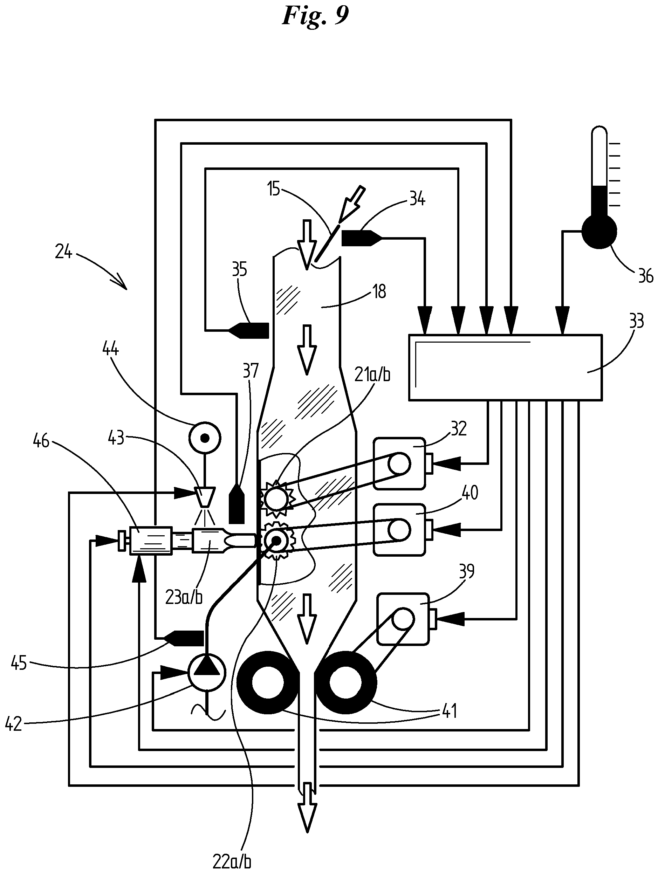

Nach dem Verschweißen der Profilstreifen 14a, 14b mit der Folienbahn 10 kommt es häufig im Nachgang zu einer Faltenbildung der Folienbahn 10 im verschweißten Bereich. Dies liegt, wie eingangs bereits erläutert, insbesondere daran, dass die Folienbahn 10 und der Druckstreifen 15 bzw. die Profilstreifen 14a, 14b in der Regel mittels Zugkräften entlang der Schweißstation 24 gefördert werden. Beispielsweise mittels Zugkräften, die von stromab der Schweißstation 24 angeordneten Zugrollen 41, vgl. Fig. 9, aufgebracht werden, entlang denen die Folienbahn 10 und der Druckverschluss 15 geführt werden bzw. die diese entsprechend entlang der Schweißstation 24 ziehen.

Materialbedingt dehnen sich die Profilstreifen 14a, 14b einerseits und die Folienbahn 10 andererseits unterschiedlich aus und ziehen sich dann nach Wegfall der Zugkräfte wieder unterschiedlich zusammen. Dieser Effekt wird dadurch verstärkt oder ergänzt, dass die Profilstreifen 14a, 14b und die Folienbahn beim Verschweißen auch durch die damit einhergehende Erwärmung zunächst gedehnt werden und sich dann beim Erkalten ebenfalls - materialbedingt unterschiedlich - wieder zusammenziehen.

Um dieser Faltenbildung entgegenzuwirken, werden mit den Kraftübertragungsorganen 21a und 21b jeweils zusätzlich Druckkräfte in die Profilstreifen 14a bzw. 14b eingeleitet, die dieser Faltenbildung entgegenwirken. Zu diesem Zweck sind die Kraftübertragungsorgane 21a, 21b jeweils als drehend (mit einem entsprechenden Motor) angetriebene Kraftübertragungsrolle ausgebildet, die jeweils in einem Kraftübertragungsbereich über den Umfang verteilt im vorliegenden Fall zackenförmige Kraftübertragungselemente 28 aufweist. Diese Kraftübertragungselemente 28 greifen jeweils an dem jeweiligen Profilstreifen 14a, 14b zur Übertragung der Druckkräfte an.

Zur Optimierung der Kraftübertragung ist auf der jeweils anderen Seite des jeweiligen Profilstreifens 14a, 14b jeweils ein Gegenorgan 38 angeordnet, insbesondere eine Rolle, die gegen den Profilstreifen 14a, 14b drückt, sodass der Profilstreifen 14a, 14b zur Übertragung der Druckkräfte zwischen dem Kraftübertragungsorgan 21a bzw. 21b und dem jeweiligen Gegenorgan 38 angeordnet, insbesondere geklemmt ist.

Im vorliegenden Fall ist die Drehrichtung der Kraftübertragungsorgane 21a und 21b derart gewählt, dass die Richtung der Druckkräfte, die diese übertragen, der Förderrichtung entspricht, in die die Profilstreifen 14a, 14b gefördert werden, wenn sie sich in der Schweißstation 24 befinden bzw. entlang der Schweißstation 24 gefördert werden.

Dabei ist die Umfangsgeschwindigkeit des jeweiligen Kraftübertragungsorgans 21a und 21b größer gewählt als die Fördergeschwindigkeit, mit der die Folienbahn 10 gefördert wird bzw. größer als die Fördergeschwindigkeit, mit der die Profilstreifen 21a bzw. 21b allein durch die Zugkräfte der Zugrollen 41 gefördert werden. Bevorzugt ist diese Umfangsgeschwindigkeit um 10% bis 50% größer, besondere bevorzugt um 30%.

Um bei dieser Übertragung der Druckkräfte auf den jeweiligen Profilstreifen 14a, 14b ein seitliches Ausknicken derselben zu verhindern, also eine unerwünschte Bewegung senkrecht zur Förderrichtung der Profilstreifen 14a, 14b, sind Führungsmittel vorgesehen.

In Förderrichtung des jeweiligen Profilstreifens 14a, 14b zwischen dem jeweiligen Kraftübertragungsorgan 21a, 21b und dem jeweiligen Anlagemittel 22a, 22b ist ein Führungsmittel 30 angeordnet, das ein solches Ausknicken nach innen bzw. in Richtung der Trennweiche 18 verhindert. Das Führungsmittel 30 ist dabei auf der Seite des jeweiligen Profilstreifens 14a, 14b angeordnet, auf der auch das Kraftübertragungsorgan 21a, 21b und das Anlagemittel 22a, 22b angeordnet sind. Im vorliegenden Fall kann das Führungsmittel 30 beispielsweise eine Führungsschiene mit einer parallel zu dem Profilstreifen 14a, 14b verlaufenden Führungsfläche sein.

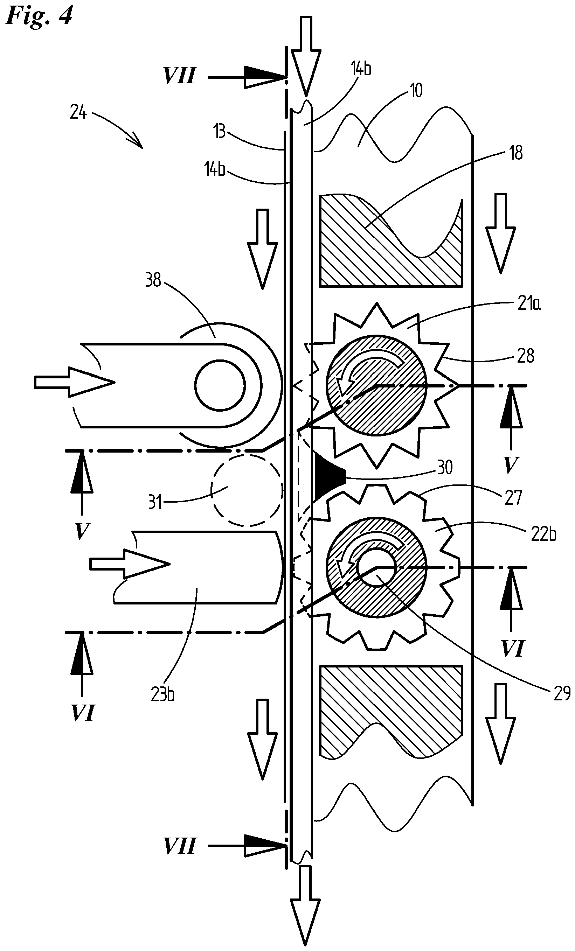

Ein durch die Druckkräfte bewirktes Ausknicken des jeweiligen Profilstreifens 14a, 14b in die entgegengesetzte Richtung (nach außen bzw. von der Trennweiche 18 weg) kann durch ein weiteres Führungsmittel 31, vgl. Fig. 4, verhindert werden, dass auf der entsprechend anderen Seite des jeweiligen Profilstreifens 14a, 14b angeordnet ist, nämlich auf der Seite, auf der sich das jeweilige Schweißorgan 23a, 23b befindet. Hierbei kann es sich beispielsweise um eine Führungsrolle oder ein Führungsrad handeln.

In Fig. 9 ist schließlich schematisch gezeigt, auf welche Weise die einzelnen Aggregate der Schweißstation bzw. des Beutelpackers gesteuert bzw. geregelt werden könnten. Zudem sind noch einige alternative oder zusätzliche Weiterbildungen der Erfindung dargestellt.

Es ist dargestellt, wie mittels einer zentralen Steuerung 33 abhängig von einem oder mehreren (aktuellen bzw. Ist-)Parametern, die gemessen werden, bestimmte Organe der Schweißstation 24 betrieben werden können.

So könnte beispielsweise mit einem Temperatursensor 34 die Temperatur des jeweiligen Profilstreifens 14a, 14b gemessen werden und/oder mit einem Temperatursensor 35 die Temperatur der Folienbahn und/oder mit einem Temperatursensor 36 die Raumtemperatur und/oder mit einem Temperatursensor 37 die Temperatur des Schweißorgans 23a, 23b und/oder mit einem Temperatursensor 45 die Temperatur des Kühlmittels der (Innen-)Kühlung der Anlagemittel 22a, 22b.

Denkbar ist dann beispielsweise, die Drehzahl bzw. Drehgeschwindigkeit des jeweiligen Kraftübertragungsorgans 21a, 21b (bzw. eines diesen antreibenden Antriebsmotors 32) bzw. die Umdrehungsgeschwindigkeit des jeweiligen Kraftübertragungsorgans 21a, 21b und somit die Stärke der in die jeweiligen Profilstreifen 14a, 14b eingeleiteten Druckkräfte abhängig von einem oder mehreren dieser Parameter automatisch zu steuern/zu regeln, vorzugsweise abhängig von der Temperatur des jeweiligen Profilstreifens 14a, 14b, und/oder der Temperatur der Folienbahn 10 und/oder der Raumtemperatur.

Denkbar ist auch, die Geschwindigkeit der Folienbahn 10 und/oder die Zugkräfte, mit denen die Folienbahn 10 entlang der Schweißstation gefördert wird (über einen Motor 39, der die Zugrollen 41 antreibt), abhängig von ein oder mehreren der vorgenannten Parameter automatisch zu steuern/zu regeln.

Denkbar ist des Weiteren, die Drehzahl bzw. Drehgeschwindigkeit des jeweiligen Anlagemittels 22a, 22b (bzw. eines diesen antreibenden Antriebsmotors 40) bzw. die Umdrehungsgeschwindigkeit des jeweiligen Anlagemittels 22a, 22b abhängig von einem oder mehreren dieser Parameter zu steuern/zu regeln.

Weiter könnte auch die Drehzahl einer das Kühlmittel der (Innen-)Kühlung der Anlagemittel 22a, 22b fördernden Kühlmittelpumpe 42 abhängig von einem oder mehreren dieser vorgenannten Parameter gesteuert/geregelt werden, vorzugsweise abhängig von der Kühlmitteltemperatur.

Weiter könnte die Leistung einer Druckluftdüse zur Kühlung des jeweiligen Schweißorgans 23a bzw. 23b abhängig von einem oder mehreren der vorgenannten Parametern gesteuert/geregelt werden (bzw. die Leistung einer Druckluftquelle 44, die Druckluft an die Druckluftdüse 43 liefert), vorzugsweise abhängig von der Temperatur des Schweißorgans 23a, 23b.

Weiter könnte abhängig von einem oder mehreren der vorgenannten Parameter auch der Druck in einem Pneumatikzylinder 46 gesteuert/geregelt werden, der das jeweilige Schweißorgan 23a, 23b von einer Ruhestellung in eine Schweißstellung (und zurück) überführen kann und der das Schweißorgan 23a, 23b in der Schweißstellung an die Folienbahn 10 drückt. Wenn sich während des Schweißprozesses das Schweißorgan 23a, 23b aufgrund des Nachgebens der Folienbahn 10 absenkt, kann durch entsprechende Steuerung/Regelung des Pneumatikzylinder 26 die Schweißkraft konstant gehalten werden.

**Bezugszeichenliste:**

| | | | |
|---|---|---|---|
| 10 | Folienbahn | 26b | Aufnahmebereich |
| 11 | Kante | 27 | Anlageflächen Anlagemittel |
| 12 | vorderer Folienbahnabschnitt | 28 | Kraftübertragungselemente |
| 13 | hinterer Folienbahnabschnitt | 29 | Kühlwasserkanal |
| 14a | Profilstreifen | 30 | Führungsmittel |
| 14b | Profilstreifen | 31 | Führungsmittel |
| 15 | Druckverschluss | 32 | Antriebsmotor |
| 16 | Falteinrichtung | 33 | zentrale Steuerung |
| 17 | Faltdreieck | 34 | Temperatursensor |
| 18 | Trennweiche | 35 | Temperatursensor |
| 18a | erstes freie Ende | 36 | Temperatursensor |
| 18b | zweites freie Ende | 37 | Temperatursensor |
| 19a | Anlagefläche | 38 | Gegenorgan |
| 19b | Anlagefläche | 39 | Antriebsmotor |
| 20a | Führungsnut | 40 | Antriebsmotor |
| 20b | Führungsnut | 41 | Zugrollen |
| 21a | Kraftübertragungsorgan | 42 | Kühlmittelpumpe |
| 21b | Kraftübertragungsorgan | 43 | Druckdüse |
| 22a | Anlagemittel | 44 | Druckluftquelle |
| 22b | Anlagemittel | 45 | Temperatursensor |
| 23a | Schweißorgan | 46 | Pneumatikzylinder |
| 23b | Schweißorgan | | |
| 24 | Schweißstation | | |
| 25a | Führungsrollen | | |
| 25b | Führungsrollen | | |
| 26a | Aufnahmebereich | | |

## Patentansprüche

1. Verfahren zum Herstellen von Beuteln aus Folie, vorzugsweise Tabakbeuteln, bei dem eine Folienbahn (10) an einer Schweißstation (24) mit mindestens einem von zwei lösbar miteinander verbindbaren Profilstreifen eines mehrfach wirkenden Druckverschlusses (15) verschweißt wird, insbesondere mittels Ultraschall, vorzugsweise während die Folienbahn (10) und der Profilstreifen kontinuierlich entlang der Schweißstation (24) gefördert werden, wobei der Profilstreifen während des Verschweißens mit in Längsrichtung desselben wirkenden, einer Faltenbildung der Folienbahn (10) entgegenwirkenden Druckkräften beaufschlagt wird, wobei die Druckkräfte mittels einem an dem Profilstreifen angreifenden Kraftübertragungsorgan (21a, 21b) auf den Profilstreifen aufgebracht werden, wobei der Profilstreifen im Bereich der Schweißstation (24) durch ein Führungsmittel seitlich geführt wird, um ein seitliches, von den Druckkräften verursachtes Ausknicken des Profilstreifens zu verhindern, wobei die Folienbahn (10) unter Mitnahme des Profilstreifens von einem stromab des Kraftübertragungsorgans (21a, 21b) angeordneten Schweißorgan (23a, 23b) im Rahmen des Schweißvorgangs gegen ein dem Schweißorgan gegenüberliegendes Anlagemittel (22a, 22b) gedrückt wird, wobei das Anlagemittel (22a, 22b) derselben Seite des Profilstreifens zugewandt ist wie das Kraftübertragungsorgan (21a, 21b), **dadurch gekennzeichnet, dass** das Führungsmittel, insbesondere eine Führungsrolle oder eine Führungsschiene, bezogen auf die Längsrichtung oder Förderrichtung des Profilstreifens zwischen dem Kraftübertragungsorgan (21a, 21b) und dem Anlagemittel (22a, 22b) angeordnet ist, vorzugsweise derart, dass es derselben Seite des Profilstreifens zugewandt ist wie das Kraftübertragungsorgan (21a, 21b) und das Anlagemittel (22a, 22b).

2. Verfahren gemäß Anspruch 1, **dadurch gekennzeichnet, dass** das Kraftübertragungsorgan (21a, 21b) ein einer Seite des Profilstreifens zugewandtes Kraftübertragungsorgan (21a, 21b) ist, insbesondere eine Kraftübertragungsrolle, insbesondere ein Kraftübertragungsorgan (21a, 21b), das ein oder mehrere, bevorzugt zackenförmige Kraftübertragungselemente aufweist, die an dem Profilstreifen, insbesondere an einer Seite des Profilstreifens, zur Übertragung der Druckkräfte angreifen.

3. Verfahren gemäß einem oder mehreren der vorhergehenden Ansprüche, **dadurch gekennzeichnet, dass** das Führungsmittel einer Seite des Profilstreifens zugewandt ist.

4. Verfahren gemäß einem oder mehreren der vorhergehenden Ansprüche, mindestens gemäß Anspruch 2, **dadurch gekennzeichnet, dass** die Folienbahn (10) und der Profilstreifen mit insbesondere durch Förderorgane, vorzugsweise Zugrollen, erzeugten Zugkräften beaufschlagt werden, um die Folienbahn (10) und den Profilstreifen in einer Förderrichtung entlang der Schweißstation (24) zu fördern, wobei die Druckkräfte zusätzlich zu den Zugkräften aufgebracht werden, vorzugsweise in Förderrichtung des Profilstreifens, insbesondere Druckkräfte, die größer sind als die Zugkräfte, und/oder dass das Anlagemittel eine drehbar angetriebene Anlagerolle ist, vorzugsweise eine Anlagerolle, deren Drehgeschwindigkeit kleiner ist als die Drehgeschwindigkeit der Kraftübertragungsrolle.

5. Verfahren gemäß Anspruch 3 und 4, **dadurch gekennzeichnet, dass** der Profilstreifen durch ein weiteres Führungsmittel seitlich geführt wird, wobei das eine Führungsmittel der einen Seite des Profilstreifens zugewandt ist und das andere Führungsmittel der anderen Seite des Profilstreifens.

6. Verfahren gemäß einem oder mehreren der vorhergehenden Ansprüche, **dadurch gekennzeichnet, dass** die Geschwindigkeitskomponente des Kraftübertragungsorgans (21a, 21b), die bei Übertragung der Druckkräfte auf den Profilstreifen wirksam ist, insbesondere die Umfangsgeschwindigkeit der Kraftübertragungsrolle, um 10% bis 50%, vorzugsweise 30% größer ist als die Geschwindigkeit, mit der die Folienbahn (10) bewegt wird, und/oder dass die Geschwindigkeitskomponente des Kraftübertragungsorgans (21a, 22b), die bei Übertragung der Druckkräfte auf den Profilstreifen wirksam ist, insbesondere die Umfangsgeschwindigkeit der Kraftübertragungsrolle, nach Maßgabe der Geschwindigkeit, Temperatur und/oder der Materialart der Folie der Folienbahn (10) und/oder des Profilstreifens gesteuert oder geregelt wird, insbesondere derart, dass in einem Speicher zu mehreren Geschwindigkeits-, Temperatur- und/oder Materialartwerten der Folie der Folienbahn (10) und/oder des Profilstreifens jeweils insbesondere in einer Tabelle ein zugeordneter Soll-Wert für die Geschwindigkeitskomponente hinterlegt ist, wobei dieser Soll-Wert zur Steuerung oder Regelung des Kraftübertragungsorgans (21a, 21b) nach Maßgabe des jeweiligen Ist-Werts der Geschwindigkeit, der Temperatur und/oder der Materialart der Folie der Folienbahn (10) und/oder des Profilstreifens ausgewählt wird.

7. Verfahren gemäß einem oder mehreren der vorhergehenden Ansprüche, **dadurch gekennzeichnet, dass** die Temperatur der Folie, die Temperatur des Profilstreifens, die Temperatur des Schweißorgans und/oder die Temperatur des Anlagemittels (22a, 22b) (im Betrieb) gemessen wird, und dass abhängig davon die Geschwindigkeitskomponente des Kraftübertragungsorgans, die bei Übertragung der Druckkräfte auf den Profilstreifen wirksam ist, geregelt wird und/oder die Leistung des Schweißorgans.

8. Verfahren gemäß einem oder mehreren der vorhergehenden Ansprüche, **dadurch gekennzeichnet, dass** die Folienbahn (10) nach dem Schweißvorgang, insbesondere stromab der Schweißstation (24), mit einem insbesondere elektrooptischen Prüforgan, bevorzugt einem Zeilensensor, im Hinblick auf die Bildung von Falten der Folienbahn (10) überwacht wird, und dass die Geschwindigkeitskomponente des Kraftübertragungsorgans (21a, 21b), die bei Übertragung der Druckkräfte auf den Profilstreifen wirksam ist, automatisch verändert wird, insbesondere geregelt wird, um einer Faltenbildung entgegenzuwirken, sollte das Prüforgan eine Faltenbildung detektieren oder eine Faltenbildung, die ein vorgegebenes Maß überschreitet, und/oder die Leistung des Schweißorgans (23a, 23b).

9. Verfahren gemäß einem oder mehreren der vorhergehenden Ansprüche, **dadurch gekennzeichnet, dass** der zweite Profilstreifen des Druckverschlusses ebenfalls während des Verschweißens mit in Längsrichtung wirkenden, einer Faltenbildung der Folienbahn (10) entgegenwirkenden Druckkräften beaufschlagt wird, insbesondere nach Maßgabe ein oder mehrerer weiterer Merkmale eines oder mehrerer der vorhergehenden Ansprüche.

10. Vorrichtung zum Herstellen von Beuteln aus Folie, vorzugsweise Tabakbeuteln, insbesondere zur Durchführung des Verfahrens gemäß einem oder mehreren der vorhergehenden Ansprüche 1-9, mit einer Schweißstation (24), an der eine Folienbahn (10) mit einem Schweißorgan (23a, 23b), insbesondere einem - bevorzugt als rotatorisch oder translatorisch bewegte Ultraschallsonotrode ausgebildeten - Ultraschall-Schweißorgan, mit mindestens einem von zwei lösbar miteinander verbindbaren Profilstreifen eines mehrfach wirkenden Druckverschlusses (15) verschweißbar ist, wobei die Vorrichtung ein Kraftübertragungsorgan (21a, 21b) aufweist, insbesondere eine drehend angetriebene Kraftübertragungsrolle, mit dem in den Profilstreifen während des Schweißvorgangs in Längsrichtung desselben wirkende, einer Faltenbildung der Folienbahn (10) entgegenwirkende Druckkräfte eingebracht werden können, und wobei die Vorrichtung, insbesondere die Schweißstation (24), ein Führungsmittel aufweist, das den Profilstreifen an mindestens einer Seite führt, um ein seitliches, von den Druckkräften verursachtes Ausknicken des Profilstreifens zu verhindern, wobei die Schweißstation (24) ein dem Schweißorgan (23a, 23b) gegenüberliegend angeordnetes Anlagemittel (22a, 22b) aufweist, insbesondere eine drehbare Anlagerolle, wobei das Anlagemittel (22a, 22b) derselben Seite des Profilstreifens zugewandt ist wie das Kraftübertragungsorgan (21a, 21b) und stromab desselben angeordnet ist, wobei die Folienbahn (10) und der Profilstreifen zwischen dem Schweißorgan (23a, 23b) und dem Anlagemittel (22a, 22b) geführt sind, und wobei die Folienbahn (10) und der Profilstreifen gemeinsam im Rahmen des Schweißvorgangs von dem Schweißorgan (23a, 23b) gegen das Anlagemittel (22a, 22b) drückbar sind, **dadurch gekennzeichnet, dass** das Führungsmittel, insbesondere eine Führungsrolle oder eine Führungsschiene, zwischen dem Kraftübertragungsorgan (21a, 21b) und dem Anlagemittel (22a, 22b) angeordnet ist, vorzugsweise derart, dass es derselben Seite des Profilistreifens zugewandt ist wie das Kraftübertragungsorgan (21a, 21b) und das Anlagemittel (22a, 22b).

11. Vorrichtung gemäß Anspruch 10, **dadurch gekennzeichnet, dass** das Kraftübertragungsorgan (21a, 21b), insbesondere die Kraftübertragungsrolle, ein oder mehrere, bevorzugt zackenförmige Kraftübertragungselemente aufweist, die an dem Profilstreifen zur Übertragung der Druckkräfte angreifen, insbesondere an einer Seite des Profilstreifens, und/oder dass das Führungsmittel einer Seite des Profilstreifens zugewandt ist.

12. Vorrichtung gemäß Anspruch 11, **dadurch gekennzeichnet, dass** das Anlagemittel (22a, 22b) eine drehbare, bevorzugt motorisch angetriebene, vorzugsweise einzelne, separate, über den Umfang verteilt angeordneten Anlageflächen aufweisende Anlagerolle ist.

13. Vorrichtung gemäß einem oder mehreren der vorhergehenden Ansprüche 10-12, **dadurch gekennzeichnet, dass** die Vorrichtung, insbesondere die Schweißstation (24), ein weiteres Führungsmittel aufweist, das den Profilstreifen seitlich führt, um ein seitliches, von den Druckkräften verursachtes Ausknicken des Profilstreifens zu verhindern, wobei das eine Führungsmittel der einen Seite des Profilstreifens zugewandt ist und dieses dort führt, und wobei das andere Führungsmittel der anderen Seite des Profilstreifens zugewandt ist und dieses dort führt.

14. Vorrichtung gemäß einem oder mehreren der vorhergehenden Ansprüche 12-13, mindestens gemäß Anspruch 12, **dadurch gekennzeichnet, dass** das Anlagemittel (22a, 22b) eine (Innen-)Kühlung aufweist, insbesondere zur Kühlung der Anlagefläche(n), vorzugsweise eine elektrisch betriebene Kühlung oder eine auf der Verwendung von Kühlflüssigkeiten basierende Kühlung.

15. Vorrichtung gemäß einem oder mehreren der vorhergehenden Ansprüche 10-14, **dadurch gekennzeichnet, dass** auf der anderen Seite des Profilstreifens, insbesondere ohne Versatz in Längsrichtung des Profilstreifens dem Kraftübertragungsorgan (21a, 21b) (direkt) gegenüberliegend, ein Gegenorgan (38) angeordnet ist, insbesondere eine Rolle, die gegen den Profilstreifen drückt, sodass der Profilstreifen zur Übertragung der Druckkräfte zwischen dem Kraftübertragungsorgan (21a, 21b) und dem Gegenorgan (38) angeordnet ist, insbesondere geklemmt ist.

16. Vorrichtung gemäß einem oder mehreren der vorhergehenden Ansprüche 10-15, **dadurch gekennzeichnet, dass** die Vorrichtung stromab der Schweißstation (24) Förderorgane, insbesondere Zugrollen aufweist, mit denen der Profilstreifen und die Folienbahn (10) unter Aufbringen von Zugkräften entlang der Schweißstation (24) förderbar sind, und dass das Kraftübertragungsorgan (21a, 21b) derart ausgebildet ist, dass die Druckkräfte, die es auf den Profilstreifen überträgt, in Förderrichtung aufgebracht werden.

## Claims

1. Method for manufacturing foil bags, preferably tobacco bags, in which a foil web (10) is welded, in particular ultrasonically, at a welding station (24), to at least one of two profile strips, which can be releasably connected to one another, of a multi-action pressure closure (15), preferably while the foil web (10) and the profile strip are being continuously conveyed along the welding station (24), wherein the profile strip is subjected, during the welding operation, to compressive forces, which act in the longitudinal direction of said profile strip and counteract creasing of the foil web (10), wherein the compressive forces are applied to the profile strip by means of a force-transmission member (21a, 21b) acting on the profile strip, wherein, in the region of the welding station (24), the profile strip is guided laterally by a guide means in order to prevent lateral buckling, caused by the compressive forces, of the profile strip, wherein the foil web (10) is pressed against a contact means (22a, 22b) opposite the welding member during the welding process, with the profile strip being carried along by a welding member (23a, 23b) arranged downstream of the force-transmission member (21a, 21b), wherein the contact means (22a, 22b) faces the same side of the profile strip as the force-transmission member (21a, 21b), **characterized in that** the guide means, in particular a guide roller or a guide rail, is arranged with respect to the longitudinal direction or conveying direction of the profile strip between the force-transmission member (21a, 21b) and the contact means (22a, 22b), preferably in such a manner that it faces the same side of the profile strip as the force-transmission member (21a, 21b) and the contact means (22a, 22b).

2. Method according to Claim 1, **characterized in that** the force-transmission member (21a, 21b) is a force-transmission member (21a, 21b) that faces one side of the profile strip, in particular a force-transmission roller, in particular a force-transmission member (21a, 21b) that has one or more, preferably serrated, force-transmission elements, which act on the profile strip, in particular on one side of the profile strip, in order to transmit the compressive forces.

3. Method according to one or more of the preceding claims, **characterized in that** the guide means faces one side of the profile strip.

4. Method according to one or more of the preceding claims, at least according to Claim 2, **characterized in that** the foil web (10) and the profile strip are subjected to tensile forces generated in particular by conveying members, preferably tension rollers, in order to convey the foil web (10) and the profile strip in a conveying direction along the welding station (24), wherein the compressive forces are applied in addition to the tensile forces, preferably in the conveying direction of the profile strip, in particular compressive forces that are greater than the tensile forces, and/or **in that** the contact means is a rotatably driven contact roller, preferably a contact roller having a slower rotational speed than the rotational speed of the force-transmission roller.

5. Method according to Claims 3 and 4, **characterized in that** the profile strip is laterally guided by a further guide means, wherein one guide means faces one side of the profile strip and the other guide means faces the other side of the profile strip.

6. Method according to one or more of the preceding claims, **characterized in that** the speed component of the force-transmission member (21a, 21b), which is active when the compressive forces are being transmitted to the profile strip, in particular the peripheral speed of the force-transmission roller, is 10% to 50% greater, preferably 30% greater, than the speed at which the foil web (10) is moved, and/or **in that** the speed component of the force-transmission member (21a, 22b), which is active when the compressive forces are being transmitted to the profile strip, in particular the peripheral speed of the force-transmission roller, is subject to open-loop or closed-loop control according to the speed, temperature and/or the material type of the foil of the foil web (10) and/or of the profile strip, in particular in such a manner that, for a plurality of speed values, temperature values and/or material-type values of the foil of the foil web (10) and/or of the profile strip, an assigned setpoint value for the speed component is stored in each case in a memory, in particular in a table, wherein, in order to subject the force-transmission member (21a, 21b) to open-loop or closed-loop control, this setpoint value is selected according to the respective actual value of the speed, the temperature and/or material type of the foil of the foil web (10) and/or of the profile strip.

7. Method according to one or more of the preceding claims, **characterized in that** the temperature of the foil, the temperature of the profile strip, the temperature of the welding member and/or the temperature of the contact means (22a, 22b) (in operation) is measured, and **in that**, in dependence thereon, the speed component of the force-transmission member, which is active when the compressive forces are being transmitted to the profile strip, and/or the power of the welding member are/is subject to closed-loop control.

8. Method according to one or more of the preceding claims, **characterized in that**, after the welding process, in particular downstream of the welding station (24), the foil web (10) is monitored with respect to the creasing of the foil web (10) using a checking member, in particular an electro-optical checking member, preferably a line sensor, and **in that** the speed component of the force-transmission member (21a, 21b), which is active when the compressive forces are being transmitted to the profile strip, and/or the power of the welding member (23a, 23b) are/is automatically changed, in particular are/is subject to closed-loop control, in order to counteract creasing, should the checking member detect any creasing or creasing that exceeds a predetermined level.

9. Method according to one or more of the preceding claims, **characterized in that** the second profile strip of the pressure closure is likewise subjected, during the welding operation, to compressive forces, which act in the longitudinal direction and counteract creasing of the foil web (10), in particular according to one or more further features of one or more of the preceding claims.

10. Apparatus for manufacturing foil bags, preferably tobacco bags, in particular for carrying out the method according to one or more of preceding Claims 1-9, having a welding station (24), at which a foil web (10) can be welded to at least one of two profile strips, which can be releasably connected to one another, of a multi-action pressure closure (15) using a welding member (23a, 23b), in particular an ultrasonic welding member, which is preferably designed as an ultrasonic sonotrode that moves in rotation or in translation, wherein the apparatus has a force-transmission member (21a, 21b), in particular a rotationally driven force-transmission roller, which can be used to introduce compressive forces, which act in the longitudinal direction of said profile strip and counteract creasing of the foil web (10), into the profile strip during the welding process, and wherein the apparatus, in particular the welding station (24), has a guide means, which guides the profile strip on at least one side in order to prevent lateral buckling, caused by the compressive forces, of the profile strip, wherein the welding station (24) has a contact means (22a, 22b), in particular a rotatable contact roller, arranged opposite the welding member (23a, 23b), wherein the contact means (22a, 22b) faces the same side of the profile strip as the force-transmission member (21a, 21b) and is arranged downstream thereof, wherein the foil web (10) and the profile strip are guided between the welding member (23a, 23b) and the contact means (22a, 22b), and wherein the foil web (10) and the profile strip can be jointly pressed against the contact means (22a, 22b) by the welding member (23a, 23b) during the welding process, **characterized in that** the guide means, in particular a guide roller or a guide rail, is arranged between the force-transmission member (21a, 21b) and the contact means (22a, 22b), preferably in such a manner that it faces the same side of the profile strip as the force-transmission member (21a, 21b) and the contact means (22a, 22b).

11. Apparatus according to Claim 10, **characterized in that** the force-transmission member (21a, 21b), in particular the force-transmission roller, has one or more, preferably serrated, force-transmission elements, which act on the profile strip in order to transmit the compressive forces, in particular on one side of the profile strip, and/or **in that** the guide means faces one side of the profile strip.

12. Apparatus according to Claim 11, **characterized in that** the contact means (22a, 22b) is a rotatable, preferably motor-driven, preferably individual, separate contact roller, which has contact surfaces distributed over the circumference.

13. Apparatus according to one or more of preceding Claims 10-12, **characterized in that** the apparatus, in particular the welding station (24), has a further guide means, which laterally guides the profile strip in order to prevent lateral buckling, caused by the compressive forces, of the profile strip, wherein one guide means faces one side of the profile strip and provides guidance there, and wherein the other guide means faces the other side of the profile strip and provides guidance there.

14. Apparatus according to one or more of preceding Claims 12-13, at least according to Claim 12, **characterized in that** the contact means (22a, 22b) has (internal) cooling, in particular for cooling the contact surface(s), preferably electrically powered cooling or cooling based on the use of cooling liquids.

15. Apparatus according to one or more of preceding Claims 10-14, **characterized in that**, on the other side of the profile strip, in particular without offset in the longitudinal direction of the profile strip, a counter-member (38), in particular a roller that presses against the profile strip, is arranged (directly) opposite the force-transmission member (21a, 21b), so that the profile strip is arranged, in particular is clamped, between the force-transmission member (21a, 21b) and the counter-member (38) in order to transmit the compressive forces.

16. Apparatus according to one or more of preceding Claims 10-15, **characterized in that** the apparatus downstream of the welding station (24) has conveying members, in particular tension rollers, which can be used to convey the profile strip and the foil web (10) along the welding station (24) with application of tensile forces, and **in that** the force-transmission member (21a, 21b) is designed in such a manner that the compressive forces it transmits to the profile strip are applied in the conveying direction.

## Revendications

1. Procédé permettant de fabriquer des sachets à partir d'un film, de préférence des sachets à tabac, dans lequel une feuille continue de film (10) est soudée au niveau d'un poste de soudage (24) avec au moins l'une de deux bandes profilées pouvant être reliées l'une à l'autre de manière amovible d'une fermeture à pression (15) à usage multiple, en particulier par ultrasons, de préférence pendant que la feuille continue de film (10) et la bande profilée sont transportées en continu le long du poste de soudage (24), dans lequel, pendant le soudage, la bande profilée est soumise à des forces de compression agissant dans la direction longitudinale de celle-ci et contrant un froissement de la feuille continue de film (10), dans lequel les forces de compression sont exercées sur la bande profilée au moyen d'un organe de transmission de force (21a, 21b) attaquant au niveau de la bande profilée, dans lequel la bande profilée est guidée latéralement dans la zone du poste de soudage (24) par un moyen de guidage afin d'empêcher un flambage latéral de la bande profilée, provoqué par les forces de compression, dans lequel la feuille continue de film (10), tout en entraînant la bande profilée, est poussée par un organe de soudage (23a, 23b) disposé en aval de l'organe de transmission de force (21a, 21b) dans le cadre de l'opération de soudage contre un moyen d'appui (22a, 22b) en face de l'organe de soudage, dans lequel le moyen d'appui (22a, 22b) est tourné vers la même face de la bande profilée que l'organe de transmission de force (21a, 21b), **caractérisé en ce que** le moyen de guidage, en particulier un rouleau de guidage ou un rail de guidage, est disposé par rapport à la direction longitudinale ou la direction de transport de la bande profilée entre l'organe de transmission de force (21a, 21b) et le moyen d'appui (22a, 22b), de préférence de telle sorte qu'il est tourné vers la même face de la bande profilée que l'organe de transmission de force (21a, 21b) et le moyen d'appui (22a, 22b).

2. Procédé selon la revendication 1, **caractérisé en ce que** l'organe de transmission de force (21a, 21b) est un organe de transmission de force (21a, 21b) tourné vers une face de la bande profilée, en particulier un rouleau de transmission de force, en particulier un organe de transmission de force (21a, 21b) qui présente un ou plusieurs éléments de transmission de force, de préférence en forme de dents de scie, qui attaquent au niveau de la bande profilée en particulier sur une face de la bande profilée pour transmettre les forces de compression.

3. Procédé selon une ou plusieurs des revendications précédentes, **caractérisé en ce que** le moyen de guidage est tourné vers une face de la bande profilée.

4. Procédé selon une ou plusieurs des revendications précédentes, au moins selon la revendication 2, **caractérisé en ce que** la feuille continue de film (10) et la bande profilée sont soumises à des forces de traction produites en particulier par des organes de transport, de préférence des rouleaux de traction, afin de transporter la feuille continue de film (10) et la bande profilée dans une direction de transport le long du poste de soudage (24), dans lequel les forces de compression sont exercées en plus des forces de traction, de préférence dans la direction de transport de la bande profilée, en particulier des forces de compression qui sont supérieures aux forces de traction, et/ou **en ce que** le moyen d'appui est un rouleau d'appui entraîné en rotation, de préférence un rouleau d'appui dont la vitesse de rotation est inférieure à la vitesse de rotation du rouleau de transmission de force.

5. Procédé selon les revendications 3 et 4, **caractérisé en ce que** la bande profilée est guidée latéralement par un moyen de guidage supplémentaire, dans lequel ledit un moyen de guidage est tourné vers une face de la bande profilée, et l'autre moyen de guidage est tourné vers l'autre face de la bande profilée.

6. Procédé selon une ou plusieurs des revendications précédentes, **caractérisé en ce que** la composante de vitesse de l'organe de transmission de force (21a, 21b) qui agit sur la bande profilée lors de la transmission des forces de compression, en particulier la vitesse circonférentielle du rouleau de transmission de force, est supérieure de 10 % à 50 %, de préférence de 30 %, à la vitesse à laquelle la feuille continue de film (10) est déplacée, et/ou **en ce que** la composante de vitesse de l'organe de transmission de force (21a, 22b) qui agit sur la bande profilée lors de la transmission des forces de compression, en particulier la vitesse circonférentielle du rouleau de transmission de force, est commandée ou régulée conformément à la vitesse, à la température et/ou au type de matériau de la feuille de la feuille continue de film (10) et/ou de la bande profilée, en particulier de telle sorte que dans une mémoire, une valeur de consigne associée pour la composante de vitesse est mémorisée respectivement, en particulier dans une table, pour plusieurs valeurs de vitesse, de température et/ou de type de matériau de la feuille de la feuille continue de film (10) et/ou de la bande profilée, dans lequel cette valeur de consigne est sélectionnée pour commander ou réguler l'organe de transmission de force (21a, 21b) conformément à la valeur réelle respective de la vitesse, de la température et/ou du type de matériau de la feuille de la feuille continue de film (10) et/ou de la bande profilée.

7. Procédé selon une ou plusieurs des revendications précédentes, **caractérisé en ce que** la température de la feuille, la température de la bande profilée, la température de l'organe de soudage et/ou la température du moyen d'appui (22a, 22b) sont mesurées (en cours de fonctionnement), et **en ce qu'**en fonction de cela, la composante de vitesse de l'organe de transmission de force qui agit sur la bande profilée lors de la transmission des forces de compression et/ou la puissance de l'organe de soudage sont régulées.

8. Procédé selon une ou plusieurs des revendications précédentes, **caractérisé en ce qu'**après l'opération de soudage, en particulier en aval du poste de soudage (24), la feuille continue de film (10) est surveillée par un organe de contrôle en particulier électro-optique, de préférence un capteur linéaire, quant au froissement de la feuille continue de film (10), et **en ce que** la composante de vitesse de l'organe de transmission de force (21a, 21b), qui agit sur la bande profilée lors de la transmission des forces de compression, est modifiée automatiquement, en particulier régulée, pour contrer un froissement au cas où l'organe de contrôle détecterait un froissement ou un froissement qui dépasse un degré prédéfini et/ou la puissance de l'organe de soudage (23a, 23b) est régulée.

9. Procédé selon une ou plusieurs des revendications précédentes, **caractérisé en ce que** la deuxième bande profilée de la fermeture à pression est pendant le soudage également soumise à des forces de compression agissant dans la direction longitudinale, contrant un froissement de la feuille continue de film (10), en particulier conformément à une ou plusieurs particularités supplémentaires d'une ou de plusieurs des revendications précédentes.

10. Dispositif permettant de fabriquer des sachets en film, de préférence des sachets à tabac, en particulier pour exécuter le procédé selon une ou plusieurs des revendications précédentes 1 à 9, comprenant un poste de soudage (24) où une feuille continue de film (10) peut être soudée avec un organe de soudage (23a, 23b), en particulier un organe de soudage par ultrasons - de préférence réalisé sous la forme d'une sonotrode à ultrasons déplacée en rotation ou en translation - avec au moins une de deux bandes profilées pouvant être reliées l'une à l'autre de manière amovible d'une fermeture à pression (15) à usage multiple, dans lequel le dispositif présente un organe de transmission de force (21a, 21b), en particulier un rouleau de transmission de force entraîné en rotation qui permet d'introduire dans la bande profilée pendant l'opération de soudage des forces de compression agissant dans la direction longitudinale de celle-ci, contrant un froissement de la feuille continue de film (10), et dans lequel le dispositif, en particulier le poste de soudage (24), présente un moyen de guidage qui guide la bande profilée sur au moins une face pour empêcher un flambage latéral de la bande profilée, provoqué par les forces de compression, dans lequel le poste de soudage (24) présente un moyen d'appui (22a, 22b) disposé en face de l'organe de soudage (23a, 23b), en particulier un rouleau d'appui tournant, dans lequel le moyen d'appui (22a, 22b) est tourné vers la même face de la bande profilée que l'organe de transmission de force (21a, 21b) et disposé en aval de celle-ci, dans lequel la feuille continue de film (10) et la bande profilée sont guidées entre l'organe de soudage (23a, 23b) et le moyen d'appui (22a, 22b), et dans lequel la feuille continue de film (10) et la bande profilée peuvent être poussées ensemble dans le cadre de l'opération de soudage par l'organe de soudage (23a, 23b) contre le moyen d'appui (22a, 22b), **caractérisé en ce que** le moyen de guidage, en particulier un rouleau de guidage ou un rail de guidage, est disposé entre l'organe de transmission de force (21a, 21b) et le moyen d'appui (22a, 22b), de préférence de telle sorte qu'il est tourné vers la même face de la bande profilée que l'organe de transmission de force (21a, 21b) et le moyen d'appui (22a, 22b).

11. Dispositif selon la revendication 10, **caractérisé en ce que** l'organe de transmission de force (21a, 21b), en particulier le rouleau de transmission de force, présente un ou plusieurs éléments de transmission de force, en particulier en forme de dents de scie, qui attaquent au niveau de la bande profilée pour transmettre les forces de compression, en particulier sur une face de la bande profilée, et/ou **en ce que** le moyen de guidage est tourné vers une face de la bande profilée.

12. Dispositif selon la revendication 11, **caractérisé en ce que** le moyen d'appui (22a, 22b) est un rouleau d'appui tournant, de préférence entraîné par moteur, de préférence individuel, séparé, présentant des surfaces d'appui réparties sur la circonférence.

13. Dispositif selon une ou plusieurs des revendications précédentes 10 à 12, **caractérisé en ce que** le dispositif, en particulier le poste de soudage (24), présente un moyen de guidage supplémentaire qui guide la bande profilée latéralement pour empêcher un flambage latéral de la bande profilée, provoqué par les forces de compression, dans lequel ledit un moyen de guidage est tourné vers une face de la bande profilée et y guide celle-ci, et dans lequel l'autre moyen de guidage est tourné vers l'autre face de la bande profilée et y guide celle-ci.

14. Dispositif selon une ou plusieurs des revendications précédentes 12 à 13, au moins selon la revendication 12, **caractérisé en ce que** le moyen d'appui (22a, 22b) présente un dispositif de refroidissement (intérieur), en particulier un dispositif de refroidissement de la ou des surface(s) d'appui, de préférence un dispositif de refroidissement à alimentation électrique ou un dispositif de refroidissement basé sur l'utilisation de liquides de refroidissement.

15. Dispositif selon une ou plusieurs des revendications précédentes 10 à 14, **caractérisé en ce que** sur l'autre face de la bande profilée, en particulier sans décalage dans la direction longitudinale de la bande profilée, (directement) en face de l'organe de transmission de force (21a, 21b), un organe antagoniste (38) est disposé, en particulier un rouleau, qui pousse contre la bande profilée de sorte que la bande profilée est disposée, en particulier serrée, entre l'organe de transmission de force (21a, 21b) et l'organe antagoniste (38) pour transmettre les forces de compression.

16. Dispositif selon une ou plusieurs des revendications précédentes 10 à 15, **caractérisé en ce que** le dispositif présente en aval du poste de soudage (24) des organes de transport, en particulier des rouleaux de traction, qui permettent de transporter la bande profilée et la feuille continue de film (10) en exerçant des force de traction le long du poste de soudage (24), et **en ce que** l'organe de transmission de force (21a, 21b) est réalisé de telle sorte que les forces de compression qu'il transmet à la bande profilée sont exercées dans la direction de transport.
